# EUROPÄISCHE PATENTSCHRIFT

(11) **EP 1 377 475 B1**
(45) Veröffentlichungstag und Bekanntmachung des Hinweises auf die Patenterteilung: **24.01.2007**
(21) Anmeldenummer: 02727220.2
(22) Anmeldetag: 13.03.2002
(51) Int. Cl.: B60W 10/00, B60R 16/02

(54) **VERFAHREN ZUM SPEICHERN VON DATEN IN EINEM KRAFTFAHRZEUG**
METHOD FOR STORING DATA IN A MOTOR VEHICLE
PROCEDE POUR LE STOCKAGE DE DONNEES DANS UN VEHICULE AUTOMOBILE

(30) Priorität: 09.04.2001 DE 10117681
(43) Veröffentlichungstag der Anmeldung: 07.01.2004
(73) Patentinhaber: SIEMENS AKTIENGESELLSCHAFT, 80333 München (DE)
(72) Erfinder: GRAF, Friedrich, 93161 Sinzing (DE); LACHMAYR, Martin, 93055 Regensburg (DE); MANZ, Martin, 74321 Bietigheim-Bissingen (DE); NELLES, Oliver, 93055 Regensburg (DE); PROBST, Gregor, 84028 Landshut (DE); ROY, Tanja, 93183 Holzheim am Forst (DE)
(86) Internationale Anmeldenummer: PCT/DE2002/000886
(87) Internationale Veröffentlichungsnummer: WO 2002/081252

(56) Entgegenhaltungen:
- EP-A- 0 982 700
- EP-A- 1 034 982
- US-A- 5 558 178
- US-B1- 6 173 277

## Beschreibung

Die Erfindung betrifft ein Verfahren zum Speichern von Daten in einem Kraftfahrzeug, die die zukünftige Fahrstrecke charakterisieren.

Bei der EP 1 034 982 A2 sind Steuereinheiten eines Kraftfahrzeugs wie z.B. Motorsteuergerät, Klimasteuergerät, Instrumentensteuergerät, etc. über multiple Kommunikationsleitungen zum gegenseitigen Austausch von Kontroll- bzw. Steuerdaten miteinander verbunden. Die jeweilige Steuereinheit weist mindestens einen Mikrocomputer auf, der der Umsetzung von Eingangssignalen wie z.B. Sensorsignalen eines Geschwindigkeits-, Kurbelwellenwinkel-, Kühlmitteltemperatursensor in ein Kontroll- bzw. Steuersignal zum Steuern von Fahrzeug- Aktuatoren wie zum Beispiel Injektoren oder Zündvorrichtungen dient. Das Kommunikationsmodell des jeweiligen Mikrocomputers weist dazu als Programmmodule ein Applikationsprogramm für die Durchführung von arithmetischen Operationen, ein Datenkonvertierungsprogramm für die Umsetzung der Kontrolldaten in ein spezifisches Format, das vom Kommunikationsprotokoll des jeweilig verwendeten Kommunikationsziels, insbesondere Aktuators, verwendet wird, und ein Kommunikationstreiberprotokoll zur Übermittlung der konvertierten Kontrolldaten auf. Die Konvertierungseinheit des Konvertierungsprogramms verwendet dabei einen gemeinsamen Speicher für aus dem Applikationsprogramm gewonnene Kontrolldaten.

Beim Fahrzeugkommunikationssystem der EP 0 982 700 A2 sind zum Ausführen von Applikationen mehrere Geräteeinheiten eines Kraftfahrzeugs mittels zugehöriger, einheitlicher Hardwareschnittstellen mit einem gemeinsamen Datenbus verbunden. Den Applikationen werden flexibel steuerbare Funktionen zugeordnet, wobei jeder Funktion jeweils eine Softwareschnittstelle zum Datenaustausch mit anderen Softwareschnittstellen und/oder Hardwareschnittstellen zugeordnet ist. Die Funktionen können dabei innerhalb beliebiger Geräteeinheiten ausgeführt werden. Dadurch wird eine Modularität auf funktionaler Ebene erreicht und die verschiedenen Funktionen können über die SoftwareSchnittstellen in beliebigen Geräteeinheiten und somit in einem beliebigen Platz innerhalb des Kommunikationssystems angeordnet und von allen Systemteilnehmern genutzt werden.

Immer mehr Kraftfahrzeuge sind mit Navigationssystemen ausgestattet. Nach Vorgabe des Ziels berechnet das System selbständig die richtige Fahrroute und führt den Fahrer mittels optischer und/oder akustischer Richtungsangaben zuverlässig an seinen Bestimmungsort. Grundlage dafür ist für gewöhnlich eine digitalisierte Straßenkarte auf CD-ROM, die das Straßennetz möglichst vollständig umfasst. Ausgehend von der Position des eigenen Kraftfahrzeugs in der digitalisierten Straßenkarte wird die Fahrroute berechnet und im Bedarfsfall eine der jeweiligen Situation angepasste Abbiegeempfehlung ausgegeben.

Neben Informationen über das Straßennetz bieten moderne Navigationssysteme auch Informationen, zum Beispiel über Krümmung und Entfernung einer zu befahrenden Kurve, die die Fahrstrecke detaillierter charakterisieren. Diese Streckendaten können dem Fahrer oder Fahrerassistenzsystemen zur Verfügung gestellt werden. Die Streckendaten können aber auch unmittelbar an Steuereinheiten zum Steuern von Fahrzeugkomponenten, wie Motor oder Getriebe, übermittelt werden. Mit zunehmender Datenmenge ergibt sich dabei aber ein erheblicher Speicher- und Kommunikationsbedarf im Kraftfahrzeug. Hierzu sind Speicher mit hoher Speicherkapazität und leistungsstarke Datennetze erforderlich, die mit einem hohen Kostenaufwand verbunden sind.

Der Erfindung liegt daher die Aufgabe zugrunde, ein Verfahren zum Speichern von Daten in einem Kraftfahrzeug anzugeben, das die benötigte Speicherkapazität im Kraftfahrzeug deutlich reduziert und/oder den Kommunikationsbedarf zwischen einzelnen Fahrzeugkomponenten minimiert.

Diese Aufgaben werden durch die.Merkmale des unabhängigen Anspruchs 1 gelöst. Vorteilhafte Weiterbildungen der Erfindung sind in den Unteransprüchen niedergelegt.

Ein in Verbindung mit der Erfindung vorgesehenes, nicht beanspruchtes, Datenspeichersystem für ein Kraftfahrzeug weist mindestens zwei Steuereinheiten zum Steuern von jeweils einer oder mehrerer Fahrzeugkomponenten, mindestens zwei Speicher zum Speichern von Daten, die zukünftig zu befahrende Strecke charakterisieren, und eine Schnittstelle zu einer Datenquelle auf. Jede Steuereinheit kann über die Schnittstelle von der Datenquelle eine Teilmenge der darin verfügbaren Streckendaten anfordern und die daraufhin übermittelten Streckendaten in dem der jeweiligen Steuereinheit zugeordneten Speicher speichern.

Durch die dezentrale Speicherung der Streckendaten in den Steuereinheiten, bei deren Steuerungsaufgaben sie zu berücksichtigen sind, wird der Kommunikationsbedarf innerhalb des Kraftfahrzeugs erheblich reduziert. Ist die Datenquelle zumindest teilweise außerhalb des Kraftfahrzeugs angeordnet, kann die im Fahrzeug gespeicherte Datenmenge an die Fahrroute und die Konfiguration des jeweiligen Fahrzeugs angepasst und dadurch in der Regel erheblich reduziert werden. Je nach Fahrroute und Fahrzeugkonfiguration sind in der Datenquelle viele nicht benötigte oder nicht verarbeitbare Streckendaten verfügbar. Diese dennoch innerhalb des Kraftfahrzeugs zu speichern verursacht lediglich zusätzlichen Speicherbedarf und somit erhöhte Kosten. Zudem ist die Gültigkeit vieler dieser Daten nur von kurzer Dauer, zum Beispiel Stau und neue Verkehrsführung.

Ein Ausführungsbeispiel der Erfindung ist im folgenden anhand der Figuren erläutert. Die Figur zeigt in schematischer Darstellung ein Datenspeichersystem für ein Kraftfahrzeug.

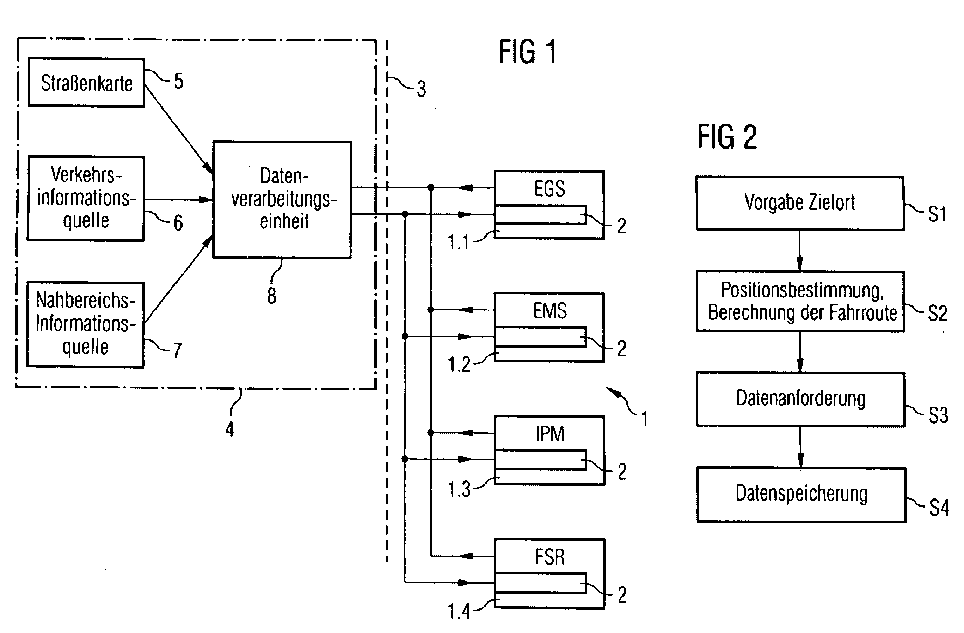

Steuereinheiten 1 dienen zum Steuern einer oder mehrerer Komponenten des Kraftfahrzeugs (Figur 1). Die Begriffe Steuereinheit und Steuern sollen dabei aber nicht einschränkend ausgelegt werden und auch Regelungseinheiten und -vorgänge einschließen. Die Steuereinheiten 1 können dabei unmittelbar einer Fahrzeugkomponente zugeordnet sein und steuernd auf diese einwirken. Beispielhaft dafür sind eine elektronische Getriebesteuerung (EGS) 1.1, durch die Schaltvorgänge eines automatischen oder automatisierten Getriebes gesteuert werden, und eine elektronische Motorsteuerung (EMS) 1.2, durch die das Drehmoment eines Motors beeinflussende Größen gesteuert werden, dargestellt. Des weiteren können die Steuereinheiten 1 auch übergeordnete Steuerfunktionen übernehmen und dabei unmittelbar oder mittelbar auch mehrere Fahrzeugkomponenten steuern. Beispielhaft dafür sind eine Schaltsteuerung oder IPM^{®}-Steuerung 1.3, die ein integriertes, das heißt gesamtheitliches Steuern des Antriebsstrangs durchführt (IPM^{®} steht dabei für Integrated Powertrain Management) und insbesondere die Schaltstrategie festlegt, und eine Fahrstabilitätsregelung (FSR) 1.4, die auch ein Antiblockiersystem und/oder eine Antriebsschlupfregelung umfassen kann, dargestellt.

Jeder der Steuereinheiten 1 ist jeweils ein Speicher 2, zum Beispiel in Form eines RAM-Speichers oder einer Festplatte, zum Speichern von Daten zugeordnet, die die zukünftig zu befahrende Fahrstrecke charakterisieren. Vorteilhaft sind die Speicher 2 in die jeweilige Steuereinheit integriert. Die gespeicherten Streckendaten werden von den jeweiligen Steuereinheiten 1 verarbeitet und/oder ausgewertet und bei der Steuerung der zugeordneten Fahrzeugkomponenten berücksichtigt.

Neben den dargestellten Steuereinheiten 1 können weitere Steuereinheiten, wie Fahrgeschwindigkeitsregler, Abstandsregler oder Batteriemanagement-System, in einem Kraftfahrzeug mit entsprechenden Speichern 2 ausgestattet sein, um Informationen über die zukünftig zu befahrende Strecke bei der jeweiligen Steuerungsaufgabe zu berücksichtigen.

Über eine Schnittstelle 3 können von den einzelnen Steuereinheiten 1 Daten, die die zukünftig zu befahrende Fahrstrecke charakterisieren, von einer Datenquelle 4 angefordert werden. Dabei wird von jeder Steuereinheit 1 jeweils nur eine Teilmenge, der in der Datenquelle 4 verfügbaren Streckendaten angefordert. Insbesondere werden von einer Steuereinheit 1 diejenigen Streckendaten angefordert, die bei den Steuerungsaufgaben der jeweiligen Steuereinheit 1 zu berücksichtigen sind. Vereinfachend wird zunächst davon ausgegangen, dass in der Datenquelle 4 beliebige Informationen über die zukünftig zu befahrende Fahrstrecke verfügbar sind. Auf die Anforderung einer Steuereinheit 1 hin werden die angeforderten Streckendaten aus der Datenquelle 4 über die Schnittstelle 3 an die Steuereinheit 1 übertragen und im zugeordneten Speicher 2 abgespeichert.

Die Datenquelle 4 weist eine digitalisierte Straßenkarte 5 auf. Der Begriff "Straßenkarte" soll dabei aber nicht einschränkend wirken. Neben Informationen über den bloßen Richtungsverlauf von Straßen kann die digitalisierte Straßenkarte beliebige Zusatzinformationen über die zu befahrenden Straßen oder Wege beinhalten. Die verfügbaren Streckeninformationen lassen sich dabei in drei Kategorien einteilen:

### a) Informationen über das Streckenprofil

Bezüglich des Streckenprofils ist sowohl der horizontale Verlauf (z.B. Kurven oder Abzweigungen) als auch der vertikale Verlauf (Steigungen oder Gefälle) von Bedeutung.

### b) Informationen bezüglich der Verkehrsreglementierung

Bezüglich Verkehrsreglementierung sind insbesondere Informationen von Bedeutung, die die Fahrgeschwindigkeit des Kraftfahrzeugs beeinflussen, zum Beispiel Geschwindigkeitsbegrenzungen, Stop-Schilder, Vorfahrtsregelungen oder Ortsschilder.

### c) Informationen über die Art und die Beschaffenheit der Fahrstrecke

Informationen über die Art der Fahrstrecke (Autobahn, Landstraße oder Ortsdurchfahrt) spielen bei der Regelung einiger Fahrzeugkomponenten eine entscheidende Rolle. Außerdem sind Informationen über die Beschaffenheit der Fahrstrecke (Asphalt, Schotter, schlechter Straßenzustand, Schlaglöcher) wünschenswert.

Neben der Straßenkarte 5 weist die Datenquelle 4 vorteilhaft eine Verkehrinformationsquelle 6 auf, die die aktuellen Werte variabler Größen bezüglich der zu befahrenden Fahrstrecke zur Verfügung stellt. Beispielhaft sind dabei folgende Informationen denkbar:
- Informationen über den Verkehrfluss (z.B. aktuelle Staumeldungen),
- Informationen über aktuell auftretende Änderungen der Straßenbeschaffenheit (z.B. Glatteis),
- Informationen über aktuelle oder zu erwartende, zum Beispiel die Sicht betreffende Witterungseinflüsse (Niederschläge, Nebel, Wettervorhersage),
- Informationen über den aktuellen Funktionszustand von Anlagen zur Verkehrsregelung (z.B. aktuelle Ampelphase),
- Informationen über außerordentliche Verkehrsreglementierungen (z.B. vorübergehend gesperrte Straßen oder umweltbedingte Vorschriften bezüglich eines emissionsarmen Betriebs).

Zudem kann die Datenquelle 4 eine Nahbereichs-Informationsquelle 7, z.B. in Form einer Kamera in Verbindung mit einem Bildverarbeitungssystem oder eines Radarsystems, die einfach oder mehrfach am Fahrzeug angebracht sind, aufweisen. Mit Hilfe einer derartigen Nahbereichs-Informationsquelle 7 ist es zum einen möglich, fahrzeugspezifische Informationen über die zu befahrende Fahrstrecke zu erlangen. Beispielsweise können Hindernisse auf der Fahrstrecke, im einfachsten Fall ein vorausfahrendes Fahrzeug, erkannt werden. Zum anderen können Informationen, die von den Datenquellen 5 und 6 nicht, unvollständig oder fehlerhaft zur Verfügung gestellt wurden, sinnvoll ergänzt, berichtigt oder ersetzt werden.

Vorteilhaft können die mit Hilfe der Nahbereichs-Informationsquelle 7 erlangten fahrzeugspezifischen Informationen über die zu befahrende Fahrstrecke oder auch ergänzte oder berichtigte Informationen aus den Datenquellen 5 und 6 zumindest teilweise an die Datenquellen 5 und 6 übermittelt werden, um den jeweiligen Datenbestand zu aktualisieren.

Die Datenquelle 4 weist außerdem eine Datenverarbeitungseinheit 8 auf. Durch die Datenverarbeitungseinheit 8 werden die von den Datenquellen 5, 6 und 7 gelieferten Streckendaten je nach Bedarf ausgewählt, kombiniert, klassifiziert und/oder komprimiert. Außerdem wird in der Datenverarbeitungseinheit 8 die aktuelle Fahrzeugposition bestimmt. Zur Ermittlung einer möglichst genauen Fahrzeugposition wird beispielsweise eines der folgenden Verfahren, auch in Kombination, angewendet:
- Positionsbestimmung über GPS (Global Positioning System, Satellitenortung),
- Koppelnavigation aus aktuellen Zustandsdaten des Fahrzeugs (Gierwinkel und Fahrzeuggeschwindigkeit),
- Differentielle Radsensordaten,
- Kompassdaten und/oder
- verschiedene Map-Matching Algorithmen.

Die Datenquelle 4 kann im Fahrzeug (on board) vorgesehen sein, kann aber auch ganz oder teilweise außerhalb des Kraftfahrzeugs (off board) angeordnet sein. Ist die Datenquelle 4 zumindest teilweise außerhalb des Kraftfahrzeugs angeordnet, werden die Daten drahtlos, zum Beispiel durch Funkübertragung mit Hilfe von GSM- oder UMTS-Signalen, an das Kraftfahrzeug übertragen. Innerhalb des Kraftfahrzeugs können die Daten sowohl über Leitungen, zum Beispiel in Form eines Datenbus-Systems, als auch mittels drahtlosen Übertragungstechniken übertragen werden. Die Art der Datenübertragung spielt für die Funktion des erfindungsgemäßen Datenspeichersystems keine Rolle. Auch die Anforderungssignale können je nach Konfiguration der Datenquelle 4 zumindest teilweise drahtlos von den Steuereinheiten 1 an die Datenquelle 4 übertragen werden. In der Figur 1 sind alle Datenübertragungswege vereinfachend als Leitungen dargestellt, diese Darstellung soll jedoch nicht einschränkend wirken.

Vorteilhaft werden die von einer Steuereinheit 1 angeforderten Streckendaten in der Datenverarbeitungseinheit 8 derart aufbereitet, dass sie unmittelbar in dem der Steuereinheit 1 zugeordneten Speicher 2 abgespeichert werden kann und von der Steuereinheit 1 unmittelbar bei der jeweiligen Steuerungsaufgabe berücksichtigt werden kann. In einer alternativen Ausführungsform können die von der Datenquelle 4 übermittelten Streckendaten aber auch in der Steuereinheit 1 entweder vor dem Abspeichern der Streckendaten oder vor dem Verarbeiten der Streckendaten bei der Steuerung der zugeordneten Fahrzeugkomponenten weiter bearbeitet werden. So ist es beispielsweise denkbar, dass einer Steuereinheit 1, die über die Schnittstelle 3 von der Datenquelle 4 Daten über zukünftig zu befahrende Kurven anfordert, nur Informationen über die x- und y-Koordinaten der zukünftigen Fahrstrecke übermittelt werden. Die Koordinaten werden dann von der Steuereinheit 1 ausgewertet und in die gewünschten Kurvendaten, zum Beispiel Entfernung und Krümmung, umgesetzt.

Im folgenden ist anhand eines Flussdiagramms (Figur 2) ein Verfahrenszyklus eines Speichervorgangs beschrieben:

Zum Beginn eines Fahrzyklus wird in einem Schritt S1 vom Fahrer der Zielort über ein Eingabemodul eingegeben. In einem Schritt S2 wird die aktuelle Position des Kraftfahrzeugs bestimmt und abhängig davon die Fahrroute berechnet. In einem Schritt S3 werden von den einzelnen Steuereinheiten 1 jeweils spezifische Teilmengen der in der Datenquelle 4 verfügbaren Streckendaten angefordert. Jede Steuereinheit fordert dabei lediglich diejenigen Streckendaten aus der Datenquelle 4 an, die zur Realisierung der jeweiligen Steuerungsaufgabe von Bedeutung sind. So werden von der Getriebesteuerung 1.1 insbesondere Streckendaten angefordert, die die Schaltvorgänge des automatischen oder automatisierten.Getriebes beeinflussen, zum Beispiel Daten über bevorstehende Kurven oder Abzweige und bevorstehende Steigungen oder Gefällstrecken. Von der Motorsteuerung 2 können beispielsweise Streckendaten angefordert werden, die bei der Regenerierung des Katalysators zu berücksichtigen sind. Vom Fahrstabilitätssystem 1.4 werden folgerichtig nur Streckendaten angefordert, die die Fahrstabilität des Kraftfahrzeugs beeinflussen, zum Beispiel Daten über die Straßenbeschaffenheit, den Reibbeiwert oder bevorstehende Kurven. In einem Schritt S4 werden die von der Datenquelle 4 auf die jeweilige Anforderung hin gelieferten Streckendaten im Speicher 2, der der jeweiligen Steuereinheit 1 zugeordnet ist, abgespeichert. Die gespeicherten Streckendaten können dann bei den jeweiligen Steuerungsaufgaben der Steuereinheiten 1 berücksichtigt werden.

Die von den Steuereinheiten 1 angeforderte Datenmenge ist sinnvoll an die Speicherkapazität des jeweils zugeordneten Speichers anzupassen. Abhängig von der Speicherkapazität, der Länge und Komplexität der Fahrroute, der Vielfalt der bei der Steuerungsaufgabe der einzelnen Steuereinheit 1 zu berücksichtigenden Streckendaten und des für die einzelnen Streckendaten benötigten Speicherbedarfs werden von den Steuereinheiten 1 häufig nur die Streckendaten eines Teilstücks der gesamten Fahrroute angefordert und zugeordneten Speicher 2 abgespeichert. Zu gegebener Zeit, also rechtzeitig vor dem Verlassen des angesprochenen Teilstücks werden dann die Streckendaten des folgenden Teilstücks der Fahrroute angefordert. Aktuelle Änderungen der Streckendaten, die von der Verkehrinformationsquelle 6 oder der Nahbereichs-Informationsquelle 7 zur Verfügung gestellt werden, müssen auch unabhängig von einer Streckendaten-Anforderung durch eine Steuereinheit 1 berücksichtigt werden. Hierzu werden die geänderten Streckendaten entweder unmittelbar an die Steuereinheiten 1 übermittelt oder den Steuereinheiten 1 wird ein Signal übermittelt, das eine Änderung von Streckendaten signalisiert. Vorteilhaft beinhaltet das Signal auch Informationen, welche Streckendaten von der Änderung betroffen sind. Die Steuereinheiten 1 können dann, wenn die momentan im jeweiligen Speicher 2 abgelegten Streckendaten von der Änderung betroffen sind, neue Streckendaten anfordern.

## Patentansprüche

1. Verfahren zum Speichern von Daten in einem Kraftfahrzeug, die dessen zukünftige Fahrstrecke charakterisieren,
bei dem
- von mindestens zwei Steuereinheiten (1) jeweils eine Teilmenge der in einer Datenquelle (4) verfügbaren, die zukünftig zu befahrende Strecke charakterisierenden Daten einer digitalisierten Straßenkarte (5) angefordert werden,
- die angeforderte Teilmenge der in der digitalisierten Straßenkarte verfügbaren Streckendaten von der Datenquelle (4) über eine Schnittstelle (3) an die jeweilige Steuereinheit (1) übertragen werden, und
- die Streckendaten in einem der jeweiligen Steuereinheit (1) zugeordneten Speicher (2) abgespeichert werden.

2. Verfahren nach Anspruch 1, **dadurch gekennzeichnet, dass** die von der Datenquelle (4) übermittelten Streckendaten in der jeweiligen Steuereinheit (1) vor dem Abspeichern im zugeordneten Speicher (2) weiter verarbeitet werden.

3. Verfahren nach einem der Ansprüche 1 oder 2, **dadurch gekennzeichnet, dass** die Teilmenge der in der digitalisierten Straßenkarte (5) verfügbaren Streckendaten von einer Datenquelle (4) im Kraftfahrzeug angefordert wird.

4. Verfahren nach einem der Ansprüche 1 oder 2, **dadurch gekennzeichnet, dass** die Teilmenge der in der digitalisierten Straßenkarte (5) verfügbaren Streckendaten von einer Datenquelle (4) zumindest teilweise außerhalb des Kraftfahrzeugs angefordert wird.

5. Verfahren nach einem der vorhergehenden Ansprüche, **dadurch gekennzeichnet, dass** die Streckendaten zumindest teilweise drahtlos übermittelt werden.

6. Verfahren nach einem der vorhergehenden Ansprüche, **dadurch gekennzeichnet, dass** die Streckendaten mittels einer Datenverarbeitungseinheit (8) der Datenquelle (4) ausgewählt, kombiniert, klassifiziert und/oder komprimiert werden.

## Claims

1. Method for storing data in a motor vehicle, said data characterising the future route to be travelled by said vehicle, wherein
- a subset of the data of a digitized road map (5), which data is available in a data source (4) and characterises the future route to be travelled, can be requested in each case by at least two control units (1),
- the requested subset of the route data available in the digitized road map is transmitted from the data source (4) via an interface (3) to the respective control unit (1), and
- the route data is stored in a memory (2) assigned to the respective control unit (1).

2. Method according to claim 1, **characterised in that** the route data transmitted from the data source (4) is processed further in the respective control unit (1) before being stored in the assigned memory (2).

3. Method according to one of claims 1 or 2, **characterised in that** the subset of the route data that is available in the digitized road map (5) is requested from a data source (4) located in the motor vehicle.

4. Method according to one of claims 1 or 2, **characterised in that** the subset of the route data that is available in the digitized road map (5) is requested from a data source (4) located at least partially outside the motor vehicle.

5. Method according to one of the preceding claims, **characterised in that** the route data is transmitted at least partially by wireless means.

6. Method according to one of the preceding claims, **characterised in that** the route data is selected, combined, classified and/or compressed by means of a data processing unit (8) of the data source (4).

## Revendications

1. Procédé de mémorisation de données dans un véhicule automobile qui caractérisent son trajet futur, dans lequel :
- une quantité partielle des données d'une carte routière numérisée (5) qui sont disponibles dans une source de données (4) et caractérisent le trajet futur à emprunter est respectivement demandée par au moins deux unités de commande (1),
- la quantité partielle demandée des données de trajet de la source de données (4) qui sont disponibles dans la carte routière numérisée est transmise à l'unité de commande (1) respective par une interface (3), et
- les données de trajet sont enregistrées dans l'une des mémoires (2) associés à l'unité de commande (1) respective.

2. Procédé selon la revendication 1,
**caractérisé en ce que**
les données de trajet transmises par la source de données (4) sont retransformées dans l'unité de commande (1) respective avant l'enregistrement dans la mémoire (2) associée.

3. Procédé selon l'une des revendications 1 ou 2,
**caractérisé en ce que**
la quantité partielle des données de trajet disponibles dans la carte routière numérisée (5) est demandée par une source de données (4) dans le véhicule automobile.

4. Procédé selon l'une des revendications 1 ou 2,
**caractérisé en ce que**
la quantité partielle des données de trajet disponibles dans la carte routière numérisée (5) est demandée par une source de données (4) se trouvant au moins en partie à l'extérieur du véhicule automobile.

5. Procédé selon l'une des revendications précédentes,
**caractérisé en ce que**
les données de trajet sont transmises au moins en partie par une liaison sans fil.

6. Procédé selon l'une des revendications précédentes,
**caractérisé en ce que**
les données de trajet sont sélectionnées, combinées, classées et/ou compressées au moyen d'une unité de traitement de données (8) de la source de données (4).
